Europäisches Patentamt

European Patent Office

Office européen des brevets

(11) Publication number: **0 104 282**
**B1**

# EUROPEAN PATENT SPECIFICATION

(45) Date of publication of patent specification: **12.11.86**

(21) Application number: **82305067.9**

(22) Date of filing: **24.09.82**

(51) Int. Cl.⁴: **B 01 J 2/16,** B 01 J 8/24

(54) Apparatus for granulation or coating.

(43) Date of publication of application:
**04.04.84 Bulletin 84/14**

(45) Publication of the grant of the patent:
**12.11.86 Bulletin 86/46**

(84) Designated Contracting States:
**BE DE FR GB IT NL**

(56) References cited:
FR-A-2 181 084
GB-A- 962 711
US-A-3 110 626

(73) Proprietor: *Chisso Corporation*
6-32, Nakanoshima 3-chome Kita-ku
Osaka-shi Osaka-fu (JP)

(72) Inventor: **Fujita, Toshio**
6-14, Jinnai 2-chome Minamatashi
Kumamotoken (JP)
Inventor: **Matsuoka, Hideaki**
8-7, Sakuragaoka Minamatashi
Kumamotoken (JP)
Inventor: **Yoshida, Shigemitsu**
10-7, Jinnai 2-chome Minamatashi
Kumamotoken (JP)
Inventor: **Ikishima, Yukio**
10-5, Shiohamamachi Minamatashi
Kumamotoken (JP)

(74) Representative: **Ruffles, Graham Keith et al**
**MARKS & CLERK 57-60 Lincoln's Inn Fields**
**London WC2A 3LS (GB)**

Courier Press, Leamington Spa, England.

# Description

This invention relates to an apparatus for granulation or coating by means of a spouting bed.

It has been known for some time that the spouting bed system is a superior method for coating of granules or granulation. For example, Japanese patent publications No 13896/1963 and No 24281/1967 disclose a process for coating granules wherein granules to be coated are placed in a spouting bed and a coating liquid is sprayed onto them. Furthermore, Japanese patent publication No 2294/1963 discloses an apparatus wherein a guide pipe is provided inside a column whose lower part takes an inverted cone or pyramid shape, and a coating liquid is fed through a spray pipe provided inside the guide pipe to effect coating onto granules, powder, or other particles passing through the inside of the guide pipe in suspended state. Japanese patent publication No 47230/1978 and Japanese patent application laid-open No 92715/1978 disclose or suggest that granulation apparatus employing the spouted bed system is superior.

The present inventors have studied the coating of granules and granulation wherein the advantages of the above-mentioned spouting bed systems are adopted, and find that it is very difficult for known apparatus to treat large amounts of material. For example, using the spouting bed systems disclosed in the above-mentioned Japanese patent publications No 13896/1963 and No 24281/1967, it has been found that a stabilized spouting bed can be formed when a small-scale testing apparatus is employed, whereas no stabilized spouting bed is formed when a large-scale practical apparatus is employed, and coating and granulating operations are substantially impossible. However, it has been observed that the use of a guide pipe is useful for bringing the apparatus for spouting bed process into large scale operation. In practice, stabilization of a spouting bed is difficult when a large-scale apparatus is employed, as described above, but according to the result of studies by the use of guide pipe under conditions in a broad range, it seems the presence of a guide pipe enables particles to be blown from the lower part of an annular fixed layer around the guide pipe upwards through the inside of the guide pipe, even under conditions where no spouting bed is formed in the absence of the guide pipe; thus, the same state as that of the so-called spouting bed can easily be formed. As a result, coating and granulating operations by the use of a large-scale column have become possible. In spite of such devices, however, it has been found that further increase in the column diameter or use of adhesive particles raises the following problems:

Firstly, the amount of particles sent from the lower part of the spouting bed column to the guide pipe varies, resulting in the so-called pulsation phenomenon and hence unstable operation. This becomes not only the cause of cracking of particles in the case of granulation, but also the cause of damage to the resulting coating in the case of coating.

Secondly, a part of the annular fixed layer cakes together thereby to make impossible the uniform circulation of particles and hence the substantial operation.

These problems can be overcome according to a process as disclosed in Japanese patent publication No 1355/1975 wherein a gas is adequately fed in to the annular fixed layer around the guide pipe to fluidize the fixed layer or to keep the flow rate of the gas till particles at the annular part are brought substantially into a non-gravity state, whereby it is possible to avoid pulsation or caking together. However, it has been found that such a process has the following drawbacks:

The apparatus is complicated; power for feeding a large amount of gas is needed; and moreover, when a solvent is used as the coating liquid and recovered, such recovery is not easy due to the diluted concentration. Further, in the case where continuous granulation is carried out while particles are circulated, as disclosed in the above Japanese patent application laid-open No 29715/1978, or in the case where it is necessary to vary the form or size of particles of every batch in the batchwise coating operation, it has been found that it is necessary to control the flow amount of gas sent to the annular part around the guide pipe, which, however, is cumbersome; hence such processes are unsuitable for treating particles in a large amount.

The object of the present invention is to provide a coating or granulating apparatus which can be designed so that when large scale coating or granulation is carried out according to the spouting bed system using a guide pipe, it can prevent the spout from pulsating and also the fixed layer from caking together.

The present invention resides in a coating or granulating apparatus consisting of a vessel having a lower part of inverted cone, pyramid or like shape reducing in cross-section to a gas-gushing port (which often is hereinafter referred to as an orifice) directed to the inside of the vessel and situated at the lowermost part of the vessel; a guide pipe above the gas-gushing port through which guide pipe the gushing gas from the gushing port is forced to pass together with particles inside the vessel to be coated or grown by granulation and blown upwards by the gas; and a spray nozzle for spraying a coating liquid or a particle-growing material onto the particles and being located in the vicinity of the centre of the gas-gushing port or thereabove, which apparatus is characterized by one or more obstacle members each in the form of a vertically arranged surface body which hinders transmission of pressure due to heaped particles inside the particle layer when formed between the inner wall surface of the vessel and the outer wall surface of the guide pipe, but which does not substantially hinder descent of the particles, and is radially arranged from the guide pipe to extend within the said layer of particles.

The fixed layer of particles is a layer of particles which accumulates outside the guide pipe and inside the vessel, and gradually descends towards the space between the lower end of the guide pipe and the lower inner wall surface of the vessel. Such particles are in contrast with particles which ascend at a considerable speed through the inside of the guide pipe together with the gas therein.

The vessel whose lower part takes an inverted cone or pyramid type has not particular limitation, but it is preferably a vessel whose lower part takes an inverted cone shape and whose upper part is cylindrical.

The shape of the guide pipe also has no particular limitation, but it is preferably cylindrical. For example, the guide pipe can be a cylindrical pipe, a cylindrical sieve, a perforated cylindrical pipe, or a cylindrical hurdle.

The obstacle member may take various forms, for example, the surface body can be a member or fitting having an overall shape of a plane or curved surface, which may include a plate, a perforated plate, a reticular plate, a hurdle, etc.

The number, length, surface area, etc. of the obstacle member can be adequately selected depending on the size of vessel, the properties of the particles, etc. For example, in the case where the amount of particles fed from the fixed layer to the guide pipe is unstable with accompaniment of a violent pulsation, it is preferable to fix baffles radially and mainly inside the inverted cone part of the vessel so as to extend close to the orifice located at the lower part of the inverted cone, in as large a number as possible, so long as the baffles do not prevent the particles from descending. In the case of particles which are adhesive and have an inferior fluidity in the fixed layer of particles, it is preferred that the baffles reach the upper part of the fixed layer of particles.

The apparatus for coating or granulation of the present invention may bs provided with a ceiling panel and an exhaust vent at the upper part of the vessel, a particle feed pipe on the wall of the vessel above the fixed layer of particles and a valve for particle fed provided on the feed pipe, a gas feed pipe leading to the gas-gushing port, a particle discharge port provided in the gas feed pipe and below the gas-gushing port, etc. Further, for continuous operation, a particle discharge pipe may be provided on the wall of the vessel at the height of the upper end of the fixed layer of particles, together with a particle discharge valve set thereon.

The reason why the effectiveness of the obstacle member in the apparatus of the present invention is exhibited is not clear, but may be explained as follows: When the spouting bed apparatus is sized to a large scale, the amount of filled particles increases the load pressure on the particles; hence in the absence of the guide pipe, the spout gas column formed above the orifice is crushed, which results in bubbling. When the guide pipe is provided above the orifice, the load exerted by the particles is supported by the guide pipe to prevent the spout gas column from crushing, but since the load exerted onto the fixed layer of particles between the guide pipe and the vessel wall cannot be reduced, the pressure exerted onto particles is increased and bridge formation occurs, resulting in caking of particles and loss of fluidity which make the feed of particles to the spouting part unsteady and a cause of pulsation. Thus, it is assumed that the obstacle member in the apparatus of the present invention reduces such load pressure exerted onto the fixed layer of particles, prevents particles from sticking together and improves the circulation of particles.

By the use of the apparatus of the present invention, it is possible to prevent the particle circulation from pulsating and particles from caking together, to make it easy to carry out a large scale granulation or coating operation according to the spouting bed system. The apparatus of the present invention is particularly appropriate for large-scale mass-production equipment employing a vessel having a diameter at the shell part of 1 m or larger, but the apparatus is also effective even in the case where the diameter is less than 1 m, when granulation or coating of small particles to an extent of 1 mm is carried out or when coating is to be carried out under conditions where cohesion is a problem.

Fig. 1 shows a vertical cross-section of an embodiment of the apparatus of the present invention.

Fig. 2 shows a cross section of the apparatus of Fig. 1 along the line II—II of Fig. 1.

Fig. 3 shows a schematic view of the system wherein coating or granulation of particles is carried out using the apparatus of the present invention.

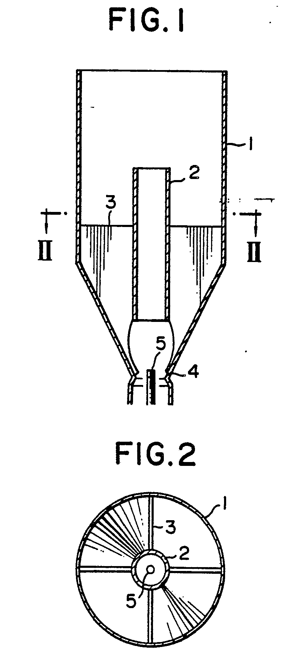

In Figs. 1 and 2, members for supporting the guide pipe, the baffle and another obstacle members are omitted.

The spouting bed apparatus comprises a vertical cylindrical vessel 1 with an inverted cone configuration at the lower part and provided with a gas-gushing port 4 at the lowermost part. A guide pipe 2 is provided inside the vessel concentrically therewith and there is a spray nozzle 5 for spraying a coating solution or particle-growing material. The apparatus is provided with at least one obstacle member 3 which hinders pressure transmission by heaped particles inside the layers of particles formed between the inner wall surface of the vessel and the outer wall surface of the guide pipe, but substantially does not hinder the particles from descending within the layer.

As shown in the drawings, the obstacle member takes the form of a vertically arranged surface body 3 (that is, a baffle) arranged radially from the guide pipe.

In the case where the amount of particles fed from the fixed layer to the guide pipe is unstable with accompaniment of a violent pulsation, it is preferable to fix baffles 3 radially mainly inside the inverted cone part of the vessel 1 so as to extend close to the orifice 4 located at the lower part of the inverted cone as shown in Figs. 1 and 2, in as large a number as possible, as long as the baffles do not prevent the particles from descending. In the case of particles which are adhesive and have an inferior fluidity in the fixed layer of particles, it is preferred that the baffles reach the upper part of the fixed layer of particles.

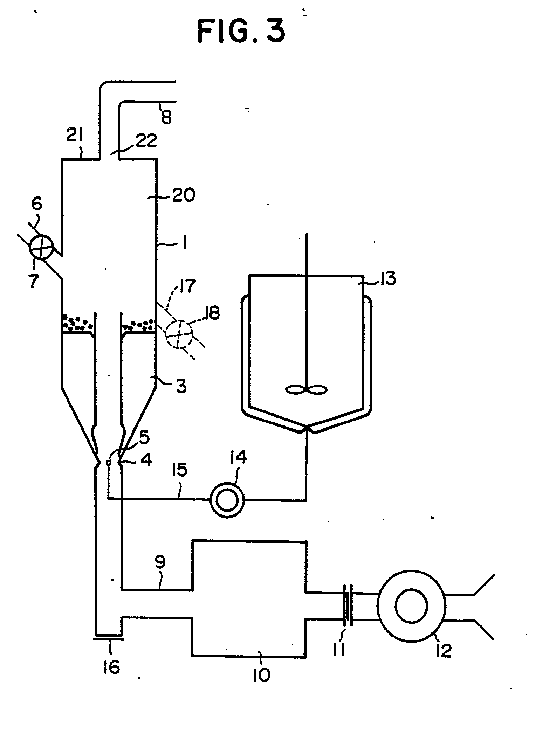

The equipment of Fig. 3 further comprises a spray nozzle 5, a particle feed pipe 6 on the wall of the vessel above the fixed layer of particles and a valve 7 for fed particles provided on the feed pipe, exhaust pipe 8, a gas feed pipe 9 leading to the gas-gushing port, air heater 10, flowmeter 11, air blower 12, vessel 13 for adjusting coating liquid, feed pump 14 for coating liquid, feed pipe 15 for coating liquid, a particle discharge port 16 provided in the gas feed pipe and below the gas-gushing port, a ceiling panel 21 and an exhaust vent 22 at the upper part of the vessel. As shown in Fig. 3, for continuous operation, the apparatus may be provided with a particle discharge pipe 17 on the wall of the vessel at the height of the upper end of the fixed layer of particles, together with a particle discharge valve 18 set thereon.

The present invention will be further illustrated by way of non-limiting Examples.

Example 1

Coating was carried out employing equipment for particle coating as shown in Fig. 3 wherein the coating apparatus 20 included a vessel having a diameter of 1,500 mm and provided with 8 baffles, but not fitted with particle discharge pipe 17 and particle discharge valve 18 (shown by dotted line in Fig. 11). The calibre of the orifice was 200 mm and that of the guide pipe was 375 mm.

1,500 kg of granular urea having a diameter of 2.5 mm were fed into the vessel and circulated while 4,000 Nm³/hr of hot air was passed through the orifice. When the temperature of the granules reached 70°C, a hot solution consisting of polyethylene (2 parts by weight), an ethylene-vinyl acetate copolymer (3 parts by weight) and tetrachloroethylene (95 parts by weight) and at a temperature of 100°C was fed in an amount of 2,500 kg over 110 minutes, during which the temperature of the hot air was controlled so as to keep the particle temperature at 70°C. During the coating operation, the circulation of granules was constant and stabilized operation could be carried out. After completion of the feed of the hot solution, the spouting operation was continued as it was, for about 5 minutes, after which hot air was stopped and coated granular urea was withdrawn.

The coating uniformity of the coated granular urea thus obtained was examined as follows: One hundred coated granules were randomly selected and the weight of the coated granules was compared with that of the original particles. From the weights, an average percentage coating (X̄)

and a standard deviation (σ) were calculated, giving an X̄ of 8.25% and an σ of 1.05. Further the percentage dissolving out in water at 25°C over 3 days was found to be 2.8%. The coating material used in this example was rich in the amount of ethylene-vinyl acetate copolymer and the coating had a strong adhesive property, and nevertheless the coating was uniform. Thus, the results obtained above were superior in terms of numeral values of coated fertilizer.

Comparative Example 1

Coating operation was carried out under the same conditions as in Example 1 except that the baffles in the coating apparatus employed in Example 1 were removed.

When granules were fed, a pulsation phenomenon (a phenomenon in which granules are intermittently blown up through the guide pipe, was occasionally observed in the circulation, but when coating started, the occurrence of this phenomenon reduced. From 20 minutes after the feed of the coating solution started, the amount of granules being circulated decreased gradually, and after completion of the coating, the amount decreased apparently to about half. Hot air flow was stopped and granules were withdrawn from the discharge port. As a result, only about 1/3 of the original amount flowed out. As the result of the observation of the inside of the vessel, it was found that about half caked together and fluidity was lost. Since the coating material was rich in the ethylene-vinyl acetate copolymer and the coating had a strong adhesive property, the caking occurred due to compaction of granules. The caking was to such an extent that when the granules were taken out an a weak force was applied to thereto, the cake separated into individual granules. However, since the fluidity was lost, individual granules were not coated with necessary coating, while the granules which flowed out were coated with more than the necessary amount of coating. The two were uniformly blended together to observe various properties as in Example 1. As a result, the average percentage coating was 7.9%, the standard deviation was 4.8% and the percentage dissolving out in water over 3 days was 56%. Such results are inferior as coated fertilizer.

Example 2

Urea melt was subjected to granulation, employing overall equipment for granulation as shown in Fig. 3, wherein the granulation apparatus 20 had a vessel diameter of 2,000 mm and was provided with 8 baffles and granule discharge pipe 17 and granule discharge valve 18 (as shown by dotted lines). Further, a sifter was connected to the granule discharge pipe 17 and the undersize having passed through the sifter was returned to the vessel through particle feed pipe 6, while the oversize was roughly crushed and particularly fine particles removed and the resulting particles were returned to the vessel through particle feed pipe 6. The vessel 13 served for adjusting the urea melt.

A product having a size of 7 to 9 mesh was produced by granulation as follows:

The sieve of the sifter was of 7 to 9 mesh, and 600 kg of urea particles of 9 to 12 mesh were fed in which were intended to perform the function of nuclei in the vessel; air was gushed through the orifice at a rate of 4,000 Nm³/hr to circulate particles; urea melt was fed through the spray nozzle at a rate of 1,400 kg/hr; particles were withdrawn by overflow from the vessel at a rate of 5,000 kg/hr and sifted by the sifter, the undersize being returned to the vessel as it was, while the oversize was returned thereto after being roughly crushed. Granulation was continued under these conditions.

Operation was very smoothly carried out, and granular urea having an excellent form could be produced at a rate of 1,300 kg/hr.

Comparative Example 2

Granulation operation was carried out under the same conditions as in Example 2 except that the baffles in the granulation apparatus 20 employed in Example 2 were removed.

As a result, circulation in the vessel was no uniformly carried out and notable cracking and pulverization of particles occurred, due to the pulsation phenomenon. Thus, in the case of a column of 2,000 mm diameter, it was observed that baffles were very effective.

Examples 3 and 4 and Comparative Example 3

The same apparatus as in Example 1 was employed except for a vessel diameter of 2,000 mm, an orifice diameter of 310 mm and a guide pipe diameter of 600 mm (the inner surface of the guide pipe being coated with Teflon (trademark)), with the obstacle members being as shown in Table 1. 4,000 kg of granular urea having a diameter of 2.5 mm were fed into the vessel and circulated, while 10,000 Nm³/hr of hot air was passed through the orifice into the vessel of the apparatus. When the temperature of the granules reached 70°C, 6,000 kg of a hot solution consisting of polyethylene (4 parts by weight), an ethylene-vinyl acetate copolymer (one part by weight) and tetrachloroethylene (95 parts by weight) and having a temperature of 100°C were fed over 110 minutes, during which the hot air temperature was controlled so as to keep the granule temperature at 70°C. The condition of granules during the coating in this case and the qualities of the resulting product (uniformly of coating and percentage dissolving out in water) were as shown in Table 1.

TABLE 1

|  | Obstacle member | Condition of granules during coating | Uniformity of coating | % Dissolving out in water** |
|---|---|---|---|---|
| Example 3 | 8 radial plates (system of Fig. 1) | Granules uniformly spouted from guide plate. Good circulation of granules | Good $\bar{x}=8.30$ $\sigma=1.00$ $(n=100)$ | 2.5 |
| Example 4 | Hurdles** | Granules, uniformly spouted from guide plate. Good circulation of granules | Good $\bar{x}=8.27$ $\sigma=1.08$ $(n=100)$ | 2.9 |
| Compar. Ex. 3 | No obstacle member | Spouted flow is unstable causing notable pulsing. | Bad $\bar{x}=8.23$ $\sigma=2.6$ $(n=100)$ | 25.6 |

* Measurement was carried out by dipping coated granules in 20 times their weight of water at 25°C for 3 days.
** Eight hurdles consisting of stainless steel round rods of 10 mm in diameter horizontally arranged at a radial gap of 10 mm.

As is apparent from the results, use of the obstacle members is effective.

**Claims**

1. An apparatus comprising a vessel (1) having a lower part of inverted cone, pyramid or like type; a gas-gushing port (4) directed to the inside of the vessel and situated at the lowermost part of the vessel; a guide pipe (2) provided above the gas-gushing port, through which guide pipe the gushing gas from the gas-gushing port (4) is forced to pass, together with particles which are inside the vessel to be coated or grown by granulation and which are blown upwards by the gas; and a spray nozzle (5) for spraying liquid or material onto the particles, and located in the vicinity of the centre of the gas-gushing port or thereabove,

characterized in that the apparatus comprises one or more obstacle members (3) each in the form of a vertically arranged surface body which hinders transmission of pressure due to heaped particles inside the particle layer when formed between the inner wall surface of the vessel (1) and the outer wall surface of the guide pipe (2), but which does not substantially hinder descent of the particles, and is radially arranged from the guide pipe to extend within the said layer of particles.

2. An apparatus according to claim 1, wherein the vessel (1) has a lower part which takes an inverted cone shape and an upper part which is cylindrical.

3. An apparatus according to claim 2, wherein the one or more obstacle members (3) are fixed mainly inside the inverted cone part of the vessel (1) so as to extend close to the lower part of the inverted cone, in as large a number as possible, so long as the obstacle members (3) do not prevent the particles from descending.

4. An apparatus according to claim 1 or 2, wherein the one or more obstacle members reach the position of the upper part of the layer of particles.

5. An apparatus according to any preceding claim, wherein the guide pipe (2) is cylindrical.

6. An apparatus according to any preceding claim, wherein the one or more obstacle members takes the forms of a plane or curved surface.

7. An apparatus according to claim 6, wherein the surface body comprises a plate, a perforated plate, a reticular plate, or a hurdle.

8. An apparatus according to any preceding claim, wherein the apparatus is provided with a ceiling panel and an exhaust vent at the upper part of the vessel, a particle feed pipe on the wall of the vessel above the position of the layer of particles and a valve for particle feed provided on the feed pipe, a gas feed pipe leading to the gas-gushing port, and a particle discharge port provided in the gas feed pipe and below the gas-gushing port.

9. An apparatus according to an preceding claim, wherein a particle discharge pipe is provided on the wall of the vessel at the height of the upper end of the layer of particles, together with a particle discharge valve set thereon.

10. A process for coating particles in which coating is effected in an apparatus as defined in any preceding claim.

**Patentansprüche**

1. Vorrichtung mit einem Behälter (1), der einen unteren Teil von der Art eines kopfstehenden Kegels, einer kopfstehenden Pyramide oder dergleichen aufweist, einer in das Innere des Behälters gerichteten und am untersten Teil des Behälters gelegenen Gassprudelöffnung (4), einem über der Gassprudelöffnung angeordneten Führungsrohr (2), durch welches das hervorsprudelnde Gas von der Gassprudelöffnung (4) zusammen mit in dem Behälter befindlichen, zu beschichtenden oder durch Granulation zu vermahlenden Teilchen, die durch das Gas nach oben geblasen werden, zu strömen gezwungen wird, und mit einer Sprühdüse (5) zum Versprühen von Flüssigkeit oder einem Material auf die Teilchen, die in der Nähe der Mittel der Gassprudelöffnung oder darüber angeordnet ist, dadurch gekennzeichnet, daß die Vorrichtung ein oder mehrere Hindernisse (3) enthält, von denen jedes die Form eines Körpers mit vertikal angeordneter Oberfläche aufweist, der eine Druckübertragung aufgrund innerhalb der Teilchenschicht angehäufter Teilchen verhindert, wenn eine solche Teilchenschicht zwischen der Oberfläche der Innenwand des Behälters (1) und der Oberfläche der Außenwand des Führungsrohrs (2) gebildet wird, der aber das Absinken der Teilchen nicht wesentlich behindert und der radial angeordnet ist und sich von dem Führungsrohr ausgehend in die Teilchenschicht hinein erstreckt.

2. Vorrichtung nach Anspruch 1, dadurch gekennzeichnet, daß der Behälter (1) einen unteren Teil in Form eines kopfstehenden Kegels und einen oberen zylindrischen Teil aufweist.

3. Vorrichtung nach Anspruch 2, dadurch gekennzeichnet, daß das eine oder die mehreren Hindernisse (3) hauptsächlich innerhalb des umgekehrt-kegelförmigen Teils des Behälters (1) befestigt sind und sich bis nahe an den unteren Teil des kopfstehenden Kegels erstrecken, und zwar in einer Anzahl, die so groß wie möglich ist, solange die Hindernisse (3) die Teilchen nicht am Absinken hindern.

4. Vorrichtung nach Anspruch 1 oder 2, dadurch gekennzeichnet, daß das eine oder mehreren Hindernisse die Lage des oberen Teiles der Teilchenschicht erreichen.

5. Vorrichtung nach einem der vorhergehenden Ansprüche, dadurch gekennzeichnet, daß das Führungsrohr (2) zylindrisch ist.

6. Vorrichtung nach einem der vorhergehenden Ansprüche, dadurch gekennzeichnet, daß das eine oder mehreren Hindernisse die Form einer ebenen oder gekrümmten Oberfläche aufweisen.

7. Vorrichtung nach Anspruch 6, dadurch gekennzeichnet, daß der Oberflächenkörper eine Platte, eine perforierte Platte, eine netzförmige Platte oder ein Geflecht umfaßt.

8. Vorrichtung nach einem der vorhergehenden Ansprüche, dadurch gekennzeichnet, daß die Vorrichtung mit einer Deckplatte und einer Abzugsöffnung am oberen Teil des Behälters, einem Rohr für die Zufuhr von Teilchen an der Behälterwand oberhalb der Lage der Teilchenschicht und einem Ventil für die Teilchenzufuhr in dem Zuführrohr, einem Gaszuführrohr, das zu der Gassprudelöffnung führt, und mit einer Entladungsöffnung für die Teilchen in dem Gaszufuhrrohr und unterhalb der Gassprudelöffnung versehen ist.

9. Vorrichtung nach einem der vorhergehenden Ansprüche, dadurch gekennzeichnet, daß ein Entladungsrohr für die Teilchen in der Wand des Behälters in Höhe des oberen Endes der Teilchenschicht zusammen mit einem daran angeordneten Teilchenentladungsventil angeordnet ist.

10. Verfahren zum Beschichten von Teilchen, bei dem das Beschichten in einer Vorrichtung gemäß einem der vorhergehenden Ansprüche durchgeführt wird.

**Revendications**

1. Appareil comprenant un récipient (1) ayant une partie inférieure en forme de cône ou de pyramide inversé, ou l'analogue; un orifice de jaillissement du gaz (4) dirigé vers l'intérieur du récipient et situé dans la partie la plus basse du récipient; un tube de guidage (2) monté au-dessus de l'orifice de jaillissement du gaz, tube à travers lequel le gaz jaillissant de l'orifice (4) est forcé de passer, avec les particules se trouvant à l'intérieur du récipient pour être revêtues ou pour croître par granulation et qui sont soufflées vers le haut par le gaz; et une buse de pulvérisation (5) pour pulvériser du liquide ou un produit sur les particules, située au voisinage du centre de l'orifice de jaillissement du gaz, ou au-dessus, caractérisé en ce qu'il comporte un ou plusieurs obstacles (3), ayant chacun la forme d'un corps surfacique vertical qui empêche la transmission d'une pression due à des particules agglomérées à l'intérieur de la couche de particules formée entre la surface de la paroi interne du récipient (1) et la surface de la paroi externe du tube de guidage (2), mais qui n'empêchent pratiquement pas la descente des particules, chacun s'étendant radialement du tube de guidage à l'intérieur de la couche de particules.

2. Appareil selon la revendication 1, dans lequel le récipient (1) a une partie inférieure qui a la forme d'un cône inversé et une partie supérieure qui est cylindrique.

3. Appareil selon la revendication 2, dans lequel le ou les obstacles (3) sont fixés principalement à l'intérieur de la partie du récipient (1) en forme de cône inversé du façon à s'étendre au voisinage de la partie inférieure de cône inversé, en nombre aussi grand que possible, pour autant que les obstacles (3) n'empêchent pas les particules de descendre.

4. Appareil selon la revendication 1 ou la revendication 2, dans lequel le ou les obstacles atteignent la position de la partie supérieure de la couche de particules.

5. Appareil selon l'une quelconque des revendications précédentes, dans lequel le tube de guidage (2) est cylindrique.

6. Appareil selon l'une quelconque des revendications précédentes, dans lequel le ou les obstacles ont la forme d'une surface plane ou incurvée.

7. Appareil selon la revendication 6, dans lequel le corps surfacique est une plaque, une plaque perforée, une plaque réticulée ou une claie.

8. Appareil selon l'une quelconque des revendications précédentes, qui est pourvu d'un panneau de plafond et d'un orifice d'évacuation à la partie supérieure du récipient, d'un tuyau d'amenée des particules sur la paroi du récipient au-dessus de la position de la couche de particules et d'une vanne pour l'arrivée des particules montée sur le tube d'amenée, d'un tube d'alimentation en gaz conduisant à l'orifice de jaillissement du gaz, et d'un orifice d'évacuation des particules ménagé dans le tube d'alimentation en gaz et en dessous de l'orifice de jaillissement du gaz.

9. Appareil selon l'une quelconque des revendications précédentes, dans lequel un tube d'évacuation des particules est prévu sur la paroi du récipient à la hauter de l'extrémité supérieure de la couche de particules, et une vanne d'évacuation des particules est montés sur ce tube.

10. Procédé pour revêtir des particules, dans lequel le revêtement s'effectue dans un appareil selon l'une quelconque des revendications précédentes.

# FIG. I

# FIG. 2

# FIG. 3